# EUROPEAN PATENT APPLICATION

(11) **EP 0 938 047 A1**
(43) Date of publication of application: **25.08.1999**
(21) Application number: 99102613.9
(22) Date of filing: 11.02.1999
(51) Int. Cl.: G06F 12/14

(54) **Memory protection method and device therefor**

(30) Priority: 23.02.1998 JP 4055798
(71) Applicant: NEC CORPORATION, Tokyo (JP)
(72) Inventor: Inose, Shinichi, Minato-ku, Tokyo (JP)
(74) Representative: Glawe, Delfs, Moll & Partner

(57) **Abstract**

Herein disclosed are a memory protection method and device therefor which can achieve memory protection with the addition of only a small number of hardware resources, by designing a layout of individual processes in a memory so that a memory protection function is realized for each process. The MSB to X^{th} bit of a program counter and the MSB to X^{th} bit of a memory space are allotted for memory protection fields, thereby providing 2^{x} privilege levels. When instructions under execution include a memory access, the privilege level (the value of the X^{th} bit) of the program counter and the privilege level (the value of the X^{th} bit) of an address to be accessed are compared with each other. If the privilege level of the program counter is lower than that of the address to be accessed, a memory access is inhibited.

## Description

### BACKGROUND OF THE INVENTION

### Field of the Invention

The present invention relates to a memory protection method and device for use in a memory management unit of a computer system, and more particularly to a memory protection method and device for realizing memory protection by arranging individual processes in a memory space in accordance with a predetermined rule, through utilization of information held in a program counter of a computer system and memory protection information contained in the value of a memory address.

### Description of the Related Art

Most built-in CPUs and single-chip microcomputers do not have MMUs (Memory Management Units). When developing a large-scale application on them, a huge amount of time is sometimes required to specify the cause(s) of a problem, since a large number of modules such as OSs, drivers and libraries are operating in cooperation with each other. Especially in the case where program overrun is caused by a pointer setting error, stack overflow or the like, the cause of the overrun cannot be easily specified, because all tasks (including the OSs and the drivers) are operating in the same memory space. In consideration of this, the minimum necessary memory protection function needs to be provided for each process.

According to a memory protection method applied to a conventional ordinary computer system, in order to realize the memory protection function, a status register is employed for identifying the privilege level of the instructions under execution and that of the access destination memory, and memory protection information is stored in each memory segment. This, however, results in the drawback of the hardware scale being large (Published Unexamined Japanese Patent Applications Kokai Nos. 56-93163, 59-177667, 61-94156 and 2-230442.

### SUMMARY OF THE INVENTION

It is accordingly an object of the present invention to provide a memory protection method and device which can realize memory protection with the addition of only a small number of hardware resources, by designing a layout of individual processes in a memory so that the memory protection function is realized for each process.

According to one aspect of the present invention, there is provided a memory protection method comprising the steps of: allotting memory protection fields one to each of a predetermined area of a program counter and a predetermined area of a memory space; and comparing values of the memory protection fields with each other, in order to determine whether to allow or inhibit a memory access during an execution of instructions.

According to another aspect of the present invention, there is provided a memory protection method comprising the steps of: allotting an MSB to X^{th} bit of a program counter and an MSB to X^{th} bit of a memory space for memory protection fields, thereby providing 2^{x} privilege levels; and comparing a privilege level of the program counter and a privilege level of an address to be accessed with each other when instructions under execution include a memory access; and inhibiting a memory access when, for example, the privilege level of the program counter is lower than the privilege level of the address to be accessed.

In this case, it is preferred that a reference be made to the memory protection field allotted to the memory space only when the need to gain a memory access arises during the execution of the instructions, and that the memory protection field allotted to the memory space serve as one for a usual address in other cases.

According to another aspect of the present invention, there is provided a memory protection device comprising: an execution level comparator for fetching an MSB to an X^{th} bit from a program counter and an MSB to an X^{th} bit from a memory space, and for comparing a value A of the X^{th} bit fetched from the program counter and a value B of the X^{th} bit fetched from the memory space; and output means for outputting a signal indicating whether to allow or inhibit a memory access during an execution of instructions, based on a result of the comparison.

In the above-described memory protection device, the output means outputs a memory access allowing signal when the execution level comparator determines that the value A is equal to the value B; the output means outputs a memory access allowing signal when the execution level comparator determines that the value A is greater than the value B; and the output means outputs an exception generating signal for inhibiting a memory access when the execution level comparator determines that the value A is less than the value B.

In the present invention, a privilege level is stored in the X^{th} bit of each of the existing program counter and the address space. This enables the memory protection function to be realized without the addition of large-scale hardware resources.

### BRIEF DESCRIPTION OF THE DRAWINGS

Fig. 1 is a schematic diagram showing the relationship between the address space and the memory protection field of the present invention;
Fig. 2 is a schematic diagram showing the relationship between the address space and the privilege levels of the present invention;
Fig. 3 is a schematic diagram illustrating a memory protection device according to an embodiment of the present invention;
Fig. 4 is a diagram showing the flow of control for memory protection according to the embodiment of the present invention; and
Fig. 5 is a schematic diagram showing operations according to the embodiment of the present invention.

### DETAILED DESCRIPTION OF THE PREFERRED EMBODIMENT

One embodiment of the present invention will now be described in detail, with reference to the accompanying drawings. In the present invention, numbers serving as memory protection identifiers are assigned to instructions and data items. Whether to allow or inhibit a memory access is determined depending on whether the aforementioned numbers satisfy the relationship "be greater than" or "be less than." The numbers assigned to the instructions and the data items will be hereinafter referred to as the "privilege levels."

In general, a program counter used in a computer system holds the top address of the instructions under execution. When the instructions under execution include a memory access, they contain address information concerning the access destination stored directly (i.e., direct addressing) or indirectly (i.e., relative addressing) therein.

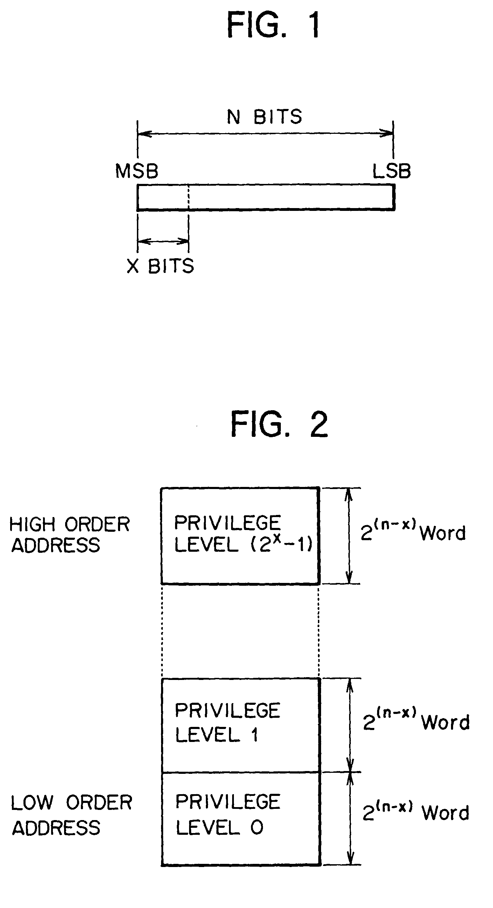

According to the present invention, memory protection information (privilege level) is fetched from a program counter of the computer system, as well as from the address information concerning the access destination memory, and the information thus fetched is used to determine whether to perform memory protection. Explaining the privilege level fetching method, a memory protection field is allotted to an area which expands from the MSB to X^{th} bit of the program counter, as illustrated in Fig. 1. The memory protection field of the program counter specifies the privilege level of an instruction. The number of privilege levels depends on the number of bits allotted to the memory protection field. To be specific, if X bits are allotted to the memory protection field, then there are 2^{x} privilege levels.

The number of bits allotted thereto is arbitrary, provided that it is not less than 1. However, if the number of allotted bits is large, the address space which can be used by one task (i.e., a group of successively arranged instructions; in short, a process) becomes narrow. Generally speaking, a computer system which employs a 32-bit address, for example, has an address space of 4 (2³²) gigabytes. If 2 bits of 32 bits are used as the memory protection field, the size of the address space which can be used by one task becomes 512 (2²⁹) megabytes. The privilege levels may be either ascending or descending numbers. For convenience of explanation in the present specification, however, let it be assumed that the larger value, the higher privilege level. And there is a rule that an instruction having a higher privilege level can order an access to a memory space having a lower privilege level.

As illustrated in Fig. 2, an X-bit address field, which specifies the privilege levels of the instructions and data items which have been allotted to the memory space, is allotted also to the memory space such that the memory space is divided into 2^{x} parts. Only in the case where the instructions under execution include a memory access, a reference is made to the aforementioned memory protection field, while in other cases, this memory protection field serves as one for a usual address.

A control for memory protection is performed when the instructions under execution include a memory access. When the instructions under execution include no memory access, therefore, a usual operation is conducted. In the case where the instructions under execution include a memory access, a control for memory protection is carried out by the following procedures.

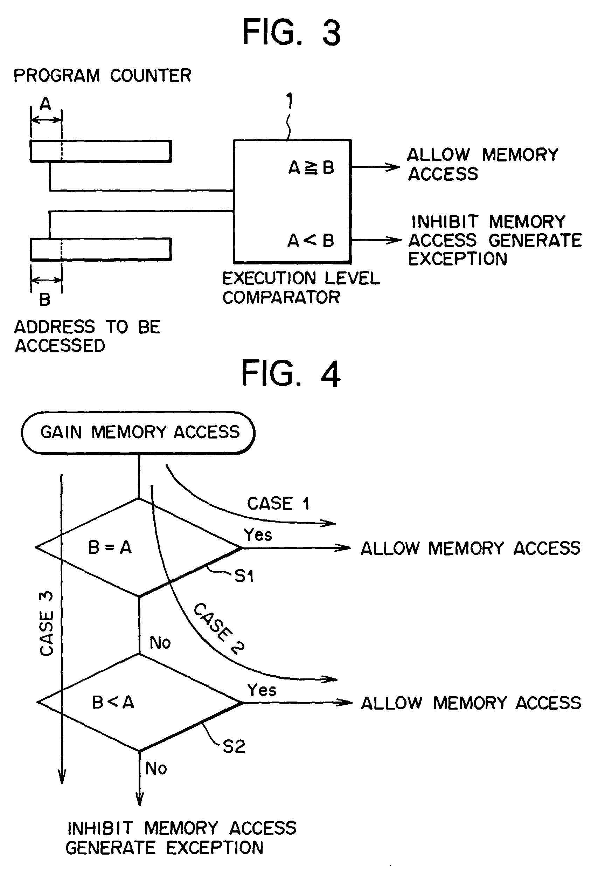

Fig. 3 is a schematic diagram illustrating a memory protection device according to an embodiment of the present invention. An execution level comparator 1 fetches an MSB to an X^{th} bit from a program counter and an MSB to an X^{th} bit from a memory space, and compares a value A of the X^{th} bit fetched from the program counter and a value B of the X^{th} bit fetched from the memory space. Output means outputs a signal indicating whether to allow or inhibit a memory access during an execution of instructions, based on a result of the comparison by the comparator 1.

Fig. 4 shows the flow of control executed by the memory protection device. Firstly, when the need to gain a memory access arises:
① The MSB to X^{th} bit of the program counter are fetched as a value A.
② The MSB to X^{th} bit of a memory address to be accessed are fetched as a value B.
③ The values A and B are compared with each other. When both values are equal to each other, a memory access is allowed, and a usual operation is continued (a step S1).
④ When the values A and B differ from each other, the relationship between the values A and B is checked. If the values A and B satisfy a relationship of A > B, a memory access is allowed, and a usual operation is continued.
⑤ If the values A and B satisfy a relationship of A < B, an exception due to a violation of memory protection is generated to inhibit a memory access and trap the processing which is being carried out by an OS, etc.

In hardware, the memory protection function is provided by the above-described method. In order to permit the above memory protection function to properly operate in an OS, etc., tasks need to be arranged in the appropriate memory space.

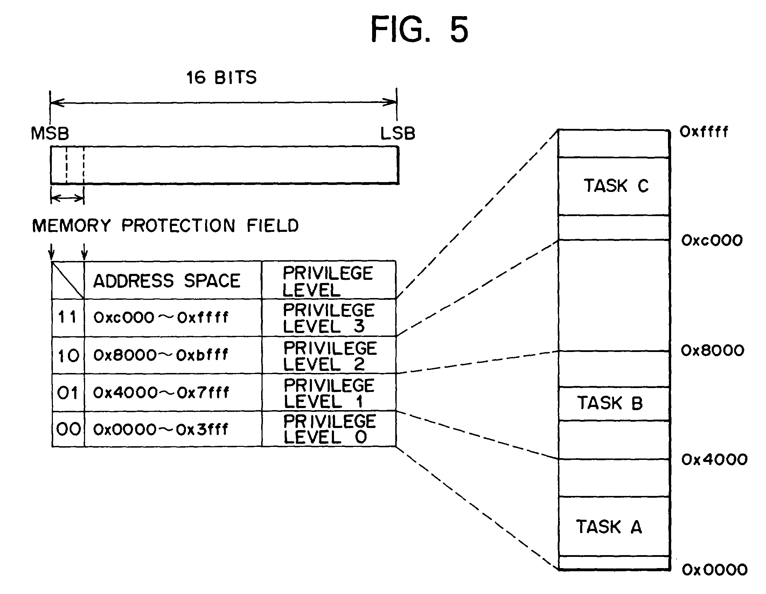

An embodiment of the present invention will now be described with reference to Fig. 5. In this embodiment, the present invention is applied to a computer system which employs a 16-bit address. And the memory protection field is a 2-bit field. Accordingly, four levels, 0 to 3, are available as the privilege levels of the tasks. The larger 2-bit value, the higher privilege level. Hence, when the memory protection field specifies "00", the privilege level is lowest or "0", whereas when the memory protection field specifies "11", the privilege level is highest or "3."

Moreover, let it be assumed that three tasks A, B and C (each being a process including instructions and data items) can be executed by the computer system. The task A is arranged between addresses 0x0000 and 0x3fff, the task B is arranged between addresses 0x4000 and 0x7fff, and the task C is arranged between an address 0xc0000 and 0xffff, for example. Accordingly, the tasks A, B and C have privilege levels 0, 1 and 3, respectively.

Explanations will now be made as to how the memory protection device structured as above operates in each of the following cases:

### (a) In the case where the computer system is executing the task A.

The task A has the privilege level 0 since the instructions and data items of the task A are in the address space between the addresses 0x0000 and 0x3fff. In this case, when the need to gain a memory access (a load-and-store instruction) arises during the execution of the task A, it is determined whether to allow or inhibit a memory access, in accordance with the flow of control for memory protection (Fig. 4). If the access destination memory address is between 0x0000 and 0x3fff, the privilege level of the instructions under execution and that of the access destination memory are equal to each other, and consequently a memory access is allowed and a usual operation is performed (Case 1).

Next, if the access destination memory address is 0x4000 or greater, the privilege level (0) of the instructions under execution is lower than the privilege level (1 or higher) of the access destination memory, and therefore a memory access is inhibited and an exception is generated (Case 3). In general, when an exception is generated, processing is turned over to the operating system. After any appropriate action is taken, a return is made to a usual operation.

### (b) In the case where the computer system is executing the task B.

Also during the execution of the task B, it is determined whether to allow or inhibit a memory access in accordance with the flow of control for memory protection, if the instructions under execution include a memory access. The task B has the privilege level 1. If the access destination memory address is less than 0x4000, the privilege level of the instructions under execution is higher than that of the access destination memory, and consequently a memory access is allowed (Case 2). If the access destination memory address is between 0x4000 and 0x7fff, or if the access destination memory address is 0x8000 or greater, the same operation as that in the case of (b) is performed. More specifically, if the access destination memory address is between 0x4000 and 0x7fff, a memory access is allowed because the privilege level of the instructions under execution is equal to that of the access destination memory. If the access destination memory address is 0x8000 or greater, a memory access is inhibited because the privilege level of the instructions under execution is lower than that of the access destination memory.

### (c) In the case where the computer system is executing the task C.

Also during the execution of the task C, it is determined whether to allow or inhibit a memory access in accordance with the flow of control for memory protection, if the instructions under execution include a memory access. However, since the task C has the highest privilege level 3, the privilege level of its instructions under execution is higher than or equal to that of any access destination memory. Consequently, any memory access is allowed, as seen from the control flow passing through Cases 1 and 2.

According to an conventional ordinary computer system, in order to realize the memory protection function, a status register is employed for identifying the privilege level of the instructions under execution and that of the access destination memory, and memory protection information is stored in each memory segment. This results in the hardware scale being large. In the above-described embodiment of the present invention, in contrast, the memory protection function is realized using the program counter and the fixed privilege levels according to address space. In this case, the memory protection function can be attained with the addition of only a small number of hardware resources.

Needless to say, the present invention is not limited to the above-described embodiment. For example, the present invention is applicable to a program counter which stores address information concerning the instructions under execution, as well as to a computer system which accesses a memory through the use of an address. The memory protection method of the present invention is applicable to almost all types of computer systems, since the present invention does not depend on the number of bits used thereby. Furthermore, according to the present invention, the number of bits allotted to the memory protection field can be set at an arbitrary number.

According to the present invention, as described above, a status register for identifying the privilege levels is unnecessary, and it is also unnecessary to store the memory protection information in each memory segment. The memory protection function is realized using the existing program counter and the fixed privilege levels according to address space, in which case the memory protection function can be attained with the addition of only a small number of hardware resources.

## Claims

1. A memory protection method characterized by comprising the steps of:
allotting memory protection fields one to each of a predetermined area of a program counter and a predetermined area of a memory space; and
comparing values of the memory protection fields with each other, in order to determine whether to allow or inhibit a memory access during an execution of instructions.

2. A memory protection method characterized by comprising the steps of:
allotting an MSB to X^{th} bit of a program counter and an MSB to X^{th} bit of a memory space for memory protection fields, thereby providing 2^{x} privilege levels; and
comparing a privilege level of the program counter and a privilege level of an address to be accessed with each other when instructions under execution include a memory access, in order to determine whether to allow or inhibit a memory access during an execution of the instructions.

3. The memory protection method according to claim 2, characterized in that the privilege level of the program counter and the privilege level of the address to be accessed are compared with each other, and a memory access is inhibited when the privilege level of the program counter is lower than the privilege level of the address to be accessed.

4. The memory protection method according to claim 1, characterized in that only in a case where a need to gain a memory access arises during the execution of the instructions, a reference is made to the memory protection field allotted to the memory space, and the memory protection field allotted to the memory space serves as a field for a usual address in other cases.

5. The memory protection method according to claim 2, characterized in that only in a case where a need to gain a memory access arises during the execution of the instructions, a reference is made to the memory protection field allotted to the memory space, and the memory protection field allotted to the memory space serves as a field for a usual address in other cases.

6. The memory protection method according to claim 3, characterized in that only in a case where a need to gain a memory access arises during the execution of the instructions, a reference is made to the memory protection field allotted to the memory space, and the memory protection field allotted to the memory space serves as a field for a usual address in other cases.

7. A memory protection device characterized by comprising:
an execution level comparator (1) for fetching an MSB to an X^{th} bit from a program counter and an MSB to an X^{th} bit from a memory space, and for comparing a value A of the X^{th} bit fetched from the program counter and a value B of the X^{th} bit fetched from the memory space; and
output means for outputting a signal indicating whether to allow or inhibit a memory access during an execution of instructions, based on a result of the comparison.

8. The memory protection device according to claim 7, characterized in that said output means outputs a memory access allowing signal when said execution level comparator determines that the value A is equal to the value B.

9. The memory protection device according to claim 7, characterized in that said output means outputs a memory access allowing signal when said execution level comparator determines that the value A is greater than the value B.

10. The memory protection device according to claim 8, characterized in that said output means outputs a memory access allowing signal when said execution level comparator determines that the value A is greater than the value B.

11. The memory protection device according to claim 7, characterized in that said output means outputs an exception generating signal for inhibiting a memory access when said execution level comparator determines that the value A is less than the value B.

12. The memory protection device according to claim 8, characterized in that said output means outputs an exception generating signal for inhibiting a memory access when said execution level comparator determines that the value A is less than the value B.

13. The memory protection device according to claim 9, characterized in that said output means outputs an exception generating signal for inhibiting a memory access when said execution level comparator determines that the value A is less than the value B.
